# FASCICULE DE BREVET EUROPEEN

(11) **EP 2 374 009 B1**
(45) Date de publication et mention de la délivrance du brevet: **26.06.2019**
(21) Numéro de dépôt: 09771549.4
(22) Date de dépôt: 08.12.2009
(51) Int. Cl.: G01P 3/481

(54) **DISPOSITIF ET PROCEDE POUR DETERMINER LA VITESSE D'UN VEHICULE TERRESTRE A ROUES A PARTIR DE MESURES D'UN CHAMP MAGNETIQUE**
VORRICHTUNG UND VERFAHREN ZUR BESTIMMUNG DES GESCHWINDIGKEIT EINES FAHRZEUGS MITTELS MESSUNGEN EINES MAGNETFELDES.
DEVICE AND METHOD FOR DETERMINING THE SPEED OF A GROUND VEHICLE FROM MEASUREMENTS OF MAGNETIC FIELD.

(30) Priorité: 09.12.2008 FR 0858386
(43) Date de publication de la demande: 12.10.2011
(73) Titulaire: SYSNAV, 27940 Aubevoye (FR)
(72) Inventeur: VISSIERE, Alain, F-34680 Saint Georges d'Orques (FR)
(74) Mandataire: Regimbeau
(86) Numéro de dépôt international: PCT/EP2009/066642
(87) Numéro de publication internationale: WO 2010/066742

(56) Documents cités:
- WO-A-2004/110793
- US-A1- 2005 093 539
- US-A1- 2008 053 245

## Description

L'invention concerne de manière générale la détermination de la vitesse de déplacement des véhicules terrestres à roues par mesure de champ magnétique. Plus particulièrement l'invention concerne un dispositif et un procédé de détermination de la vitesse de déplacement de véhicules terrestres à roues par détermination d'une fréquence de rotation des roues du véhicule à l'aide d'un magnétomètre.

Un véhicule à roues en déplacement comprend de nombreuses pièces en mouvement rotatif ou alternatif en translation (par exemple pour une voiture : roues, pistons, vilebrequins, ...). Il est connu d'utiliser un ou plusieurs magnétomètres pour déterminer une fréquence de rotation d'au moins une de ces pièces et d'en déduire une vitesse de déplacement du véhicule.

La méthode la plus directe consiste à déterminer directement une fréquence de rotation d'une roue, c'est-à-dire le nombre de tours par seconde de la roue sur elle-même. Il suffit alors de multiplier cette fréquence par le périmètre de la roue considérée pour obtenir la vitesse de déplacement du véhicule.

Pour ce faire, une méthode connue de l'art antérieur consiste à fixer un aimant sur la roue et à disposer un magnétomètre au voisinage de cette roue, par exemple sur la carrosserie de la voiture dans l'embouchure de la roue, comme par exemple dans le document US2005/0093539.

A chaque rotation, le magnétomètre mesure une forte augmentation de champ magnétique due à la proximité de l'aimant. Un tel signal est transmis à une unité de traitement.

L'unité de traitement compare le signal représentatif du champ magnétique à une valeur de référence. Elle fournit en sortie, pour chaque mesure de champ magnétique, un 0 ou un 1 selon que la mesure est inférieure ou supérieure à la valeur seuil de référence.

Ainsi, l'unité de traitement fournit un signal en créneaux successifs de 0 et de 1, le temps entre deux créneaux de 1 successifs représentant la durée d'un tour de la roue considérée. On obtient ainsi la fréquence de rotation de la roue à un instant donné.

Cependant, une telle approche ne donne pas entière satisfaction. Notamment :
- L'aimant permanent doit être solidement fixé sur la roue ce qui implique des contraintes de montage.
- L'aimant permanent peut induire un balourd indésirable.
- Le magnétomètre doit être disposé à grande proximité de l'aimant permanent pour détecter les pics de champ magnétique. Ceci implique des contraintes de montage supplémentaires, d'autant plus que le magnétomètre doit être protégé des intempéries et des autres pièces en mouvement.

Un but de l'invention est donc de proposer un dispositif de mesure d'une vitesse de déplacement d'un véhicule terrestre à roues amélioré.

A cet effet, l'invention propose un dispositif de mesure d'une vitesse de déplacement d'un véhicule terrestre à roues selon la revendication 1. L'invention repose sur la découverte surprenante qu'il est possible grâce à un traitement de signal évolué de déduire la fréquence de rotation d'une roue par un traitement des variations de champ magnétique induites par la roue métallique telle quelle. On s'affranchit ainsi de la fixation d'un aimant sur la roue, et il existe une grande souplesse quant à l'emplacement du magnétomètre.

Il est à noter que cette découverte n'est pas limitée à la détermination de la vitesse d'un véhicule et qu'il est possible, par un traitement du signal similaire à celui décrit ci-après, de suivre en fonction du temps la fréquence de déplacement de tout corps perturbant périodiquement le champ magnétique terrestre.

C'est le cas en particulier des corps au moins partiellement métalliques en mouvement rotatif ou en translation alternative, par exemple les vilebrequins ou les pistons dans un moteur de voiture.

Plus généralement encore, on pourrait ainsi déterminer la vitesse de fonctionnement de robots à mouvements répétitifs dans une chaine de montage automatisée, la vitesse de rotation d'une turbine ou d'autres applications diverses.

Avantageusement mais facultativement, le dispositif selon l'invention comprend au moins l'une des caractéristiques suivantes :
- les moyens de traitement sont aptes à établir un spectre de fréquences des mesures d'un champ magnétique par une transformée de Fourier rapide à fenêtre glissante,
- le magnétomètre et les moyens de traitement sont agencés de façon séparée l'un de l'autre, et le dispositif comprend en outre un canal de transmission entre eux,
- le magnétomètre est apte à mesurer un champ magnétique selon un ou plusieurs axes de mesure, et le magnétomètre est disposé de sorte à ce que l'axe de rotation de la roue soit sensiblement parallèle à l'un desdits axes de mesure,
- le magnétomètre est apte à mesurer un champ magnétique selon un ou plusieurs axes de mesure, et le magnétomètre est disposé de sorte à ce que l'axe de rotation de la roue soit sensiblement perpendiculaire à un desdits axes de mesure.

L'invention concerne également un procédé de mesure d'une vitesse de déplacement d'un véhicule terrestre à roues, caractérisé en ce qu'il comprend les étapes suivantes :
- mesurer un champ magnétique variable, dont certaines variations sont engendrées par la rotation d'au moins une roue au moins partiellement métallique du véhicule, telle quelle, et
- établir un spectre de fréquences desdites mesures, déterminer, à partir dudit spectre de fréquences, une fréquence de rotation de ladite roue, et déduire de cette fréquence et d'une information représentative du rayon de la roue, une vitesse de déplacement du véhicule.

Avantageusement mais facultativement, le procédé selon l'invention comprend au moins l'une des caractéristiques suivantes :
- l'établissement du spectre de fréquences est effectué par transformée de Fourier rapide à fenêtre glissante,
- la fréquence de rotation de la roue est effectuée par sélection de la fréquence principale du spectre de fréquences,
- les mesures d'un champ magnétique sont effectuées selon un axe sensiblement parallèle à l'axe de rotation de la roue du véhicule,
- les mesures d'un champ magnétique sont effectuées selon un axe sensiblement perpendiculaire à l'axe de rotation de la roue du véhicule,

L'invention concerne également un véhicule terrestre à roues comprenant au moins une roue au moins partiellement métallique, caractérisé en ce qu'il comprend un dispositif de détermination de vitesse selon l'invention.

Avantageusement mais facultativement, le véhicule selon l'invention comprend au moins l'une des caractéristiques suivantes :
- le magnétomètre est fixé à la carrosserie du véhicule,
- le véhicule comprend un tableau de bord, et le magnétomètre est disposé au voisinage du tableau de bord,
- le véhicule comprend un coffre et le magnétomètre est disposé dans le coffre.

D'autres caractéristiques, buts et avantages de la présente invention apparaîtront à la lecture de la description détaillée qui va suivre, au regard des dessins annexés, donnés à titre d'exemples non limitatifs et sur lesquels:
- la figure 1 illustre de manière schématique un dispositif de détermination de la vitesse de déplacement d'un véhicule terrestre à roues par détermination d'une fréquence de rotation des roues du véhicule à l'aide d'un magnétomètre selon une réalisation possible de l'invention, et
- Les figures 2a à 2c illustrent chacune un véhicule terrestre à roues équipé d'un dispositif de détermination de vitesse selon une réalisation possible de l'invention
- la figure 3 est un graphique représentant la courbe de vitesse d'un véhicule en fonction du temps obtenue par un dispositif selon l'invention et une courbe de vitesse reconstituée à partir des mesures d'une centrale inertielle montée sur le véhicule

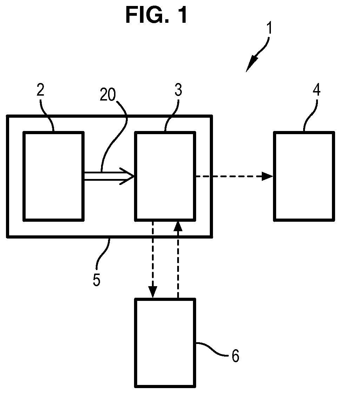

En référence à la figure 1, un dispositif 1 de détermination de la vitesse de déplacement d'un véhicule terrestre à roues selon une réalisation possible de l'invention comprend un magnétomètre 2 et une unité de traitement de données 3.

Le magnétomètre 2 est apte à capter un champ magnétique ambiant et à transmettre un signal 20 représentatif de l'évolution du champ magnétique vers une unité de traitement de données 3.

L'unité de traitement 3 établit un spectre de fréquences du signal 20. Par exemple une méthode du type "détection du maximum d'autocorrélation du signal avec sa version retardée" peut être utilisée. Dans cette méthode, décrite dans l'un des ouvrages du mathématicien Stéphane Mallat, si u(t) est le signal, on trace l'intégrale fenêtrée de u(t)^{∗}u(t-T) et on prend la première valeur de T qui maximise cette intégrale. Préférentiellement, la méthode utilisée est la transformée de Fourrier rapide à fenêtre glissante (communément appelée FFT), algorithme réputé pour sa vitesse d'exécution. On pourra néanmoins utiliser tout autre méthode d'analyse fréquentielle d'un signal connue de l'homme de l'art.

L'unité de traitement 3 détermine ensuite, parmi les fréquences identifiées, la fréquence de rotation d'au moins une roue métallique du véhicule. Cette fréquence, est ensuite multipliée au périmètre de la roue en question pour obtenir la vitesse de déplacement du véhicule.

Il est important de noter ici que la roue du véhicule est une roue telle quelle, c'est-à-dire dépourvue de tout aimant ou autre pièce magnétique spécifiquement destinée à interagir avec le magnétomètre.

De plus, on entend par « roue partiellement métallique » une roue dont au moins un des constituants est au moins partiellement en matériau métallique. Il peut s'agir de la jante, du disque de frein, d'un enjoliveur, ou de tout autre composant en rotation à la même vitesse que la roue. Ainsi, la constituant au moins partiellement métallique provoque une perturbation périodique du champ magnétique et la fréquence de cette perturbation est la même que celle de la rotation de la roue.

Le matériau métallique peut être constitué d'acier, d'un alliage à base d'aluminium ou de tout alliage métallique, en particulier ceux généralement utilisés dans la construction des constituants d'une roue.

L'invention se fonde sur le fait tout d'abord que le champ magnétique terrestre (de l'ordre de 0.5 gauss) est perturbé par les éléments du véhicule en mouvement périodique. Ainsi dans une voiture à moteur à combustion par exemple, le mouvement des roues mais aussi des pistons, du vilebrequin, des organes de transmission, etc., entraine autant de perturbations périodiques dont les fréquences se retrouvent dans le spectre du signal 20 transmis par le magnétomètre 2.

L'invention se fonde également sur le fait qu'un traitement approprié au sein de l'unité de traitement 3 est apte à identifier, dans le spectre de fréquences, la fréquence de rotation d'une roue du véhicule.

Préférentiellement, mais non limitativement, l'identification de la fréquence de rotation d'une roue se fait par sélection de la fréquence principale dans le spectre de fréquences du signal 20, c'est-à-dire celle de plus grande amplitude.

On notera que le champ magnétique est également perturbé par l'environnement du véhicule, en particulier par des transmissions hautes et moyennes fréquences (allumage du moteur, téléphone, radio).

Avantageusement, l'unité de traitement 3 est également apte à filtrer, en amont du traitement fréquentiel, le signal délivré par le magnétomètre. Préférentiellement, le filtrage est un filtrage passe-bas pour filtrer le bruit à hautes fréquences contenu dans le signal et provenant de l'environnement du véhicule.

Avantageusement, mais non limitativement, le magnétomètre 2 possède les caractéristiques suivantes :
- une plage de mesure de l'ordre de +/- 2 gauss au moins,
- une précision d'au moins 1 milligauss,
- une fréquence d'échantillonnage du champ magnétique d'au moins 100 Hz, et de préférence d'au moins 150 Hz,
- dans le cas d'un magnétomètre numérique, les données sont délivrées sur au moins 12 bits.

Préférentiellement, mais non limitativement, le magnétomètre 2 est un magnétomètre numérique trois axes de référence HMR2300 de la marque Honeywell®, délivrant directement un signal numérique échantillonnant la valeur courante du champ selon les trois axes sur 16 bits.

L'unité de traitement comprend une mémoire contenant une donnée représentative du rayon R de la roue ou de son périmètre 2^{∗}π^{∗}R.

Ainsi, la fréquence de rotation de la roue est multipliée par la valeur 2^{∗}π^{∗}R pour obtenir la vitesse de déplacement du véhicule comme expliqué plus haut.

Avantageusement, le dispositif 1 comprend une unité de visualisation 4 pour afficher en temps réel la valeur de la vitesse déterminée par le dispositif 1.

De manière avantageuse, le dispositif 1 comprend en outre un boitier 5 contenant le magnétomètre 2 et l'unité de traitement 3.

Préférentiellement, mais non limitativement, l'unité de traitement 3 est un processeur de signal numérique (DSP pour « Digital Signal Processor » en terminologie anglo-saxonne). Le dispositif 1 se présente alors sous la forme d'un boitier 5 dont les dimensions sont de quelques centimètres à un décimètre selon les trois axes.

Plus généralement, l'unité de traitement peut contenir tout moyen de calcul

Selon une autre réalisation possible de l'invention, le magnétomètre 2 et l'unité de traitement 3 sont disposés à des endroits différents sur le véhicule. Le signal 20 suit alors une transmission filaire ou sans fil, par exemple de type Wi-fi ou Bluetooth.

Avantageusement encore, l'unité de traitement de données 3 et le dispositif d'affichage 4 sont réunis en une même unité, voire intégrés au tableau de bord du véhicule.

Selon une réalisation possible de l'invention, le dispositif 1 est couplé à un dispositif de géopositionnement 6, par exemple de type GPS (pour « Global Positioning System » en terminologie anglo-saxonne).

Ainsi, lorsque le dispositif de géopositionnement 6 ne reçoit plus de données de satellites (par exemple lorsque le véhicule passe sous un tunnel), le dispositif 1 prend le relais et fournit une donnée représentative de la vitesse de déplacement du véhicule au dispositif de géopositionnement 6 qui peut alors déterminer la position du véhicule dans le tunnel.

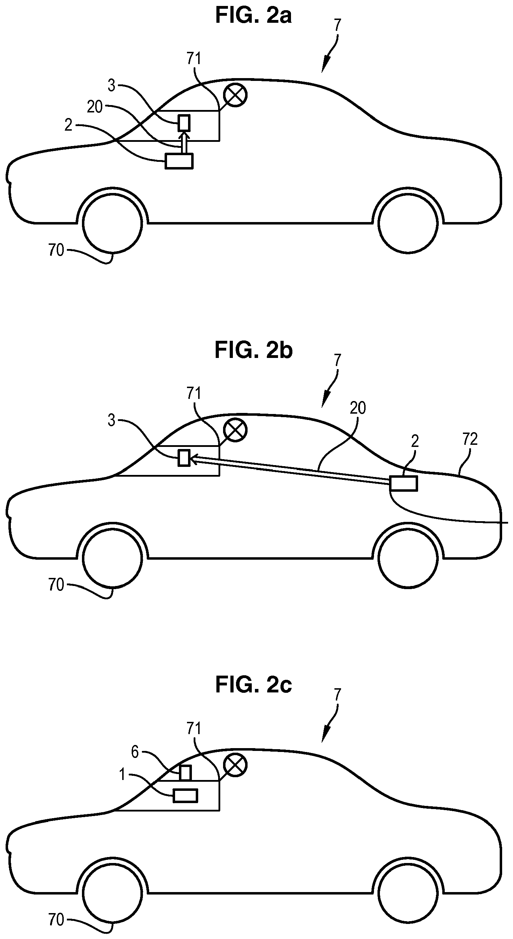

On a représenté sur chacune des figures 2a à 2c un véhicule terrestre à roues 7 équipé d'un dispositif 1 pour déterminer sa vitesse selon l'invention.

Le véhicule 7 possède au moins une roue au moins partiellement métallique 70, par exemple la roue avant gauche pour une voiture à quatre roues.

En référence à la figure 2a et selon une réalisation possible de l'invention, le magnétomètre 2 du dispositif 1 est placé à proximité de la roue 70, en étant fixé sur la carrosserie du véhicule 7. Ainsi, la rotation de la roue 70 perturbe significativement le champ magnétique dans la région du magnétomètre, ce qui facilite la détermination de la fréquence de rotation de la roue dans le spectre des fréquences du signal 20.

Dans cet exemple, l'unité de traitement 3 est disposée à un autre endroit sur le véhicule 7. Préférentiellement, mais non limitativement, le véhicule 7 comprend un tableau de bord 71 dans lequel se situe l'unité de traitement 3. De manière avantageuse, l'unité de traitement 3 reçoit alors le signal 20 du magnétomètre 2 par communication sans fil.

Préférentiellement, mais non limitativement, l'un des axes de mesures du magnétomètre 2 est sensiblement parallèle (respectivement perpendiculaire) à l'axe de rotation de la roue 70, c'est-à-dire que les deux axes sont parallèles (ou respectivement perpendiculaires) ou qu'il existe un écart angulaire de l'ordre de 30° au plus entre l'axe de mesure en question et l'axe e rotation de la roue (respectivement la perpendiculaire à l'axe de rotation de la roue).

En référence à la figure 2b, le véhicule 7 comprend avantageusement un coffre à bagages 72 dans lequel est disposé le magnétomètre 2.

Ainsi, le magnétomètre est éloigné des éléments du moteur perturbant le champ magnétique tels les pistons, le vilebrequin, etc. Ces perturbations seront donc moins importantes dans le signal 20.

Selon un autre mode de réalisation de l'invention, le véhicule représenté sur la figure 2c comprend un tableau de bord 71 dans lequel est disposé le dispositif 1 dans son intégralité, c'est-à-dire y compris le magnétomètre 2. Préférentiellement, le signal 20 est alors transmis par communication filaire.

Ce mode de réalisation se prête particulièrement à l'association du dispositif 1 avec un dispositif de géopositionnement 6 comme décrit plus haut.

Des tests ont été effectués pour valider la fiabilité du dispositif selon l'invention.

Ainsi, un dispositif 1 a été monté sur un véhicule équipé d'un dispositif de géopositionnement de type GPS. En l'occurrence, le véhicule est une voiture de la marque Volkswagen® du modèle Golf III TDI®.

Dans cet exemple, le magnétomètre 2 effectue des mesures à une fréquence de 154 Hz.

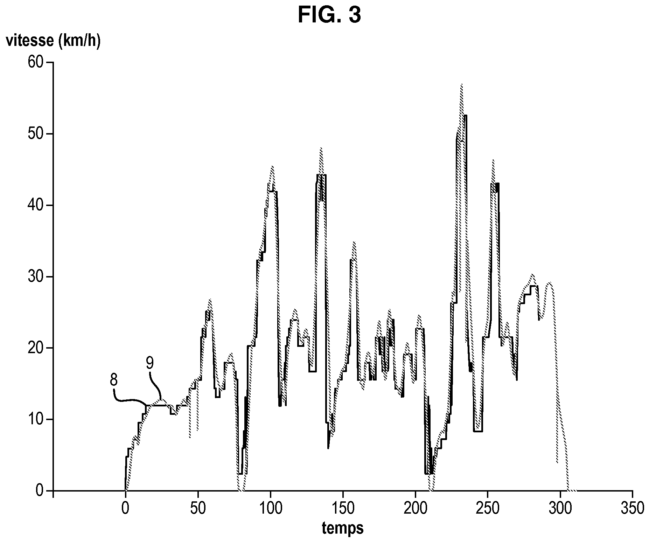

On a représenté sur la figure 3 un diagramme de la vitesse du véhicule, en km/h, en fonction du temps, en secondes.

La courbe 9 représente l'évolution de la valeur de la vitesse du véhicule reconstituée à partir des données satellites reçues par le GPS.

La courbe 8 représente l'évolution de la valeur de la vitesse déterminée par le dispositif 1 selon l'invention en fonction du temps. Cette courbe est remarquablement proche de celle obtenue à partir du GPS.

## Revendications

1. Dispositif de mesure de la vitesse de déplacement d'un véhicule terrestre à roues, **caractérisé en ce qu'**il comprend un magnétomètre fixe par rapport à la carrosserie du véhicule destiné à effectuer des mesures d'un champ magnétique et positionné de manière à être sensible aux variations de champ magnétique engendrées par la rotation d'au moins une roue au moins partiellement métallique du véhicule, telle quelle, et apte à délivrer un signal correspondant, et des moyens de traitement dudit signal aptes à établir un spectre de fréquences de celui-ci, à déterminer, à partir dudit spectre de fréquences, une fréquence de rotation de ladite roue, et à en déduire, à partir d'une information représentative du rayon de la roue, la vitesse de déplacement du véhicule.

2. Dispositif selon la revendication 1, dans lequel lesdits moyens de traitement sont aptes à établir un spectre de fréquences dudit signal par une transformée de Fourier rapide à fenêtre glissante.

3. Dispositif selon l'une des revendications 1 et 2, dans lequel le magnétomètre et les moyens de traitement sont agencés de façon séparée l'un de l'autre, et comprenant en outre un canal de transmission entre eux.

4. Dispositif selon l'une des revendications 1 à 3, dans lequel le magnétomètre est apte à délivrer un signal représentatif du champ magnétique selon plusieurs axes de mesure, et dans lequel le magnétomètre est disposé de sorte à ce que l'axe de rotation de la roue soit sensiblement parallèle à l'un desdits axes de mesure.

5. Dispositif selon l'une des revendications 1 à 3, dans lequel le magnétomètre est apte à délivrer un signal représentatif du champ magnétique selon plusieurs axes de mesure, et dans lequel le magnétomètre est disposé de sorte à ce que l'axe de rotation de la roue soit sensiblement perpendiculaire à l'un desdits axes de mesure.

6. Procédé de mesure de la vitesse de déplacement d'un véhicule terrestre à roues, **caractérisé en ce qu'**il comprend les étapes suivantes :
- engendrer un signal représentatif d'un champ magnétique variable mesuré par un magnétomètre fixe par rapport à la carrosserie du véhicule, champ magnétique dont certaines variations sont engendrées par la rotation d'au moins une roue au moins partiellement métallique du véhicule, telle quelle, et
- établir un spectre de fréquences dudit signal,
- déterminer, à partir dudit spectre de fréquences, une fréquence de rotation de ladite roue, et
- déduire de cette fréquence et d'une information représentative du rayon de la roue, la vitesse de déplacement du véhicule.

7. Procédé selon la revendication 6, dans lequel l'étape d'établissement dudit spectre de fréquences est mise en oeuvre par transformée de Fourier rapide à fenêtre glissante.

8. Procédé selon l'une des revendications 6 et 7, dans lequel l'étape de détermination de la fréquence de rotation de la roue est mise en oeuvre par sélection de la fréquence principale du spectre de fréquences.

9. Procédé selon l'une des revendications 6 à 8, dans lequel ledit signal est représentatif du champ magnétique selon un axe sensiblement parallèle à l'axe de rotation de la roue du véhicule.

10. Procédé selon l'une des revendications 6 à 8 dans lequel ledit signal est représentatif du champ magnétique selon un axe sensiblement perpendiculaire à l'axe de rotation de la roue du véhicule.

11. Véhicule terrestre à roues comprenant au moins une roue au moins partiellement métallique, **caractérisé en ce qu'**il comprend un dispositif selon l'une des revendications 1 à 5.

12. Véhicule selon la revendication 11, dans lequel le magnétomètre et fixé à la carrosserie du véhicule.

13. Véhicule selon la revendication 11, lequel comprend un tableau de bord, et dans lequel le magnétomètre est disposé au voisinage dudit tableau de bord.

14. Véhicule selon la revendication 11, lequel comprend un coffre, et dans lequel le magnétomètre est disposé dans ledit coffre.

## Patentansprüche

1. Vorrichtung zur Messung der Geschwindigkeit der Fortbewegung eines Landfahrzeugs mit Rädern, **dadurch gekennzeichnet, dass** sie ein Magnetometer umfasst, das in Bezug auf die Karosserie des Fahrzeugs festsitzend ist, das dazu bestimmt ist, Messungen eines Magnetfelds durchzuführen, und das so positioniert ist, dass es auf Schwankungen des Magnetfelds empfindlich reagiert, die durch die Drehung von mindestens einem mindestens teilweise metallischen Rad des Fahrzeugs verursacht werden, so wie es ist, und das imstande ist, ein entsprechendes Signal auszugeben, und Mittel zur Verarbeitung des Signals, die imstande sind, ein Frequenzspektrum von diesem zu erstellen, ausgehend von dem Frequenzspektrum eine Drehfrequenz des Rads zu bestimmen und ausgehend von einer Information, die bezeichnend ist für den Radius des Rads, die Geschwindigkeit der Fortbewegung des Fahrzeugs davon abzuleiten.

2. Vorrichtung nach Anspruch 1, wobei die Mittel zur Verarbeitung imstande sind, ein Frequenzspektrum des Signals durch eine schnelle Fourier-Transformation mit Schiebefenster zu erstellen.

3. Vorrichtung nach einem der Ansprüche 1 und 2, wobei das Magnetometer und die Mittel zur Verarbeitung getrennt voneinander angebracht sind, und des Weiteren umfassend einen Kanal zur Übertragung zwischen ihnen.

4. Vorrichtung nach einem der Ansprüche 1 bis 3, wobei das Magnetometer imstande ist, ein Signal auszugeben, das bezeichnend ist für das Magnetfeld gemäß mehreren Messachsen, und wobei das Magnetometer so angeordnet ist, dass die Drehachse des Rads im Wesentlichen parallel zu einer der Messachsen verläuft.

5. Vorrichtung nach einem der Ansprüche 1 bis 3, wobei das Magnetometer imstande ist, ein Signal auszugeben, das bezeichnend ist für das Magnetfeld gemäß mehreren Messachsen, und wobei das Magnetometer so angeordnet ist, dass die Drehachse des Rads im Wesentlichen senkrecht zu einer der Messachsen verläuft.

6. Verfahren zur Messung der Geschwindigkeit der Fortbewegung eines Landfahrzeugs mit Rädern, **dadurch gekennzeichnet, dass** es folgende Schritte umfasst:
- Verursachen eines Signals, das bezeichnend ist für ein variables Magnetfeld, das mittels eines Magnetometers gemessen wird, das in Bezug auf die Karosserie des Fahrzeugs festsitzend ist, Magnetfeld, von dem gewisse Schwankungen durch die Drehung von mindestens einem mindestens teilweise metallischen Rad des Fahrzeugs verursacht werden, so wie es ist, und
- Erstellen eines Frequenzspektrums des Signals,
- Bestimmen, ausgehend von dem Frequenzspektrum, einer Drehfrequenz des Rads, und
- Ableiten der Geschwindigkeit der Fortbewegung des Fahrzeugs von dieser Frequenz und von einer Information, die bezeichnend ist für den Radius des Rads.

7. Verfahren nach Anspruch 6, wobei der Schritt des Erstellens des Frequenzspektrums durch eine schnelle Fourier-Transformation mit Schiebefenster umgesetzt wird.

8. Verfahren nach einem der Ansprüche 6 und 7, wobei der Schritt des Bestimmens der Drehfrequenz des Rads durch Auswählen der Hauptfrequenz des Frequenzspektrums umgesetzt wird.

9. Verfahren nach einem der Ansprüche 6 bis 8, wobei das Signal bezeichnend ist für das Magnetfeld gemäß einer Achse, die im Wesentlichen parallel zu der Drehachse des Rads des Fahrzeugs verläuft.

10. Verfahren nach einem der Ansprüche 6 bis 8, wobei das Signal bezeichnend ist für das Magnetfeld gemäß einer Achse, die im Wesentlichen senkrecht zu der Drehachse des Rads des Fahrzeugs verläuft.

11. Landfahrzeug mit Rädern, umfassend mindestens ein mindestens teilweise metallisches Rad, **dadurch gekennzeichnet, dass** es eine Vorrichtung nach einem der Ansprüche 1 bis 5 umfasst.

12. Fahrzeug nach Anspruch 11, wobei das Magnetometer an der Karosserie des Fahrzeugs befestigt ist.

13. Fahrzeug nach Anspruch 11, das ein Armaturenbrett umfasst, und wobei das Magnetometer in der Nähe des Armaturenbretts angeordnet ist.

14. Fahrzeug nach Anspruch 11, das einen Kofferraum umfasst, und wobei das Magnetometer in dem Kofferraum angeordnet ist.

## Claims

1. Device for measuring the speed of travel of a wheeled ground vehicle, **characterised in that** it comprises a magnetometer that is fixed relative to the bodywork of the vehicle, intended to carry out measurements of a magnetic field and positioned in such a way as to be sensitive to the variations in the magnetic field caused by the rotation of at least one at least partially metallic wheel of the vehicle, as is, and capable of transmitting a corresponding signal, and means for processing said signal capable of establishing a frequency spectrum thereof, of determining, using said frequency spectrum, a frequency of rotation of said wheel, and of deducing therefrom, using information representative of the radius of the wheel, the speed of travel of the vehicle.

2. Device according to claim 1, wherein said processing means are capable of establishing a frequency spectrum of said signal via a sliding-window fast Fourier transform.

3. Device according to either claim 1 or claim 2, wherein the magnetometer and the processing means are arranged separately from one another, and further comprising a transmission channel therebetween.

4. Device according to one of claims 1 to 3, wherein the magnetometer is capable of transmitting a signal representative of the magnetic field according to a plurality of axes of measurement, and wherein the magnetometer is arranged such that the axis of rotation of the wheel is substantially parallel to one of said axes of measurement.

5. Device according to one of claims 1 to 3, wherein the magnetometer is capable of transmitting a signal representative of the magnetic field according to a plurality of axes of measurement, and wherein the magnetometer is arranged such that the axis of rotation of the wheel is substantially perpendicular to one of said axes of measurement.

6. Method for measuring the speed of travel of a wheeled ground vehicle, **characterised in that** it comprises the steps of:
- generating a signal representative of a variable magnetic field measured by a magnetometer that is fixed relative to the bodywork of the vehicle, certain variations of which magnetic field being caused by the rotation of at least one at least partially metallic wheel of the vehicle, as is, and
- establishing a frequency spectrum of said signal,
- determining, using said frequency spectrum, a frequency of rotation of said wheel, and
- deducing from this frequency and from information representative of the radius of the wheel, the speed of travel of the vehicle.

7. Method according to claim 6, wherein the step of establishing said frequency spectrum is implemented via a sliding-window fast Fourier transform.

8. Method according to either claim 6 or claim 7, wherein the step of determining the frequency of rotation of the wheel is implemented by selecting the principal frequency of the frequency spectrum.

9. Method according to one of claims 6 to 8, wherein said signal is representative of the magnetic field according to an axis that is substantially parallel to the axis of rotation of the wheel of the vehicle.

10. Method according to one of claims 6 to 8, wherein said signal is representative of the magnetic field according to an axis that is substantially perpendicular to the axis of rotation of the wheel of the vehicle.

11. Wheeled ground vehicle comprising at least one at least partially metallic wheel, **characterised in that** it comprises a device according to one of claims 1 to 5.

12. Vehicle according to claim 11, wherein the magnetometer is fixed to the bodywork of the vehicle.

13. Vehicle according to claim 11, comprising an instrument panel, and wherein the magnetometer is arranged in the vicinity of said instrument panel.

14. Vehicle according to claim 11, comprising a boot, and wherein the magnetometer is arranged in said boot.
